# EUROPEAN PATENT APPLICATION

(11) **EP 2 557 648 A1**
(43) Date of publication of application: **13.02.2013**
(21) Application number: 11176941.0
(22) Date of filing: 09.08.2011
(51) Int. Cl.: H02J 3/16

(54) **Wind farm and method for operating a wind farm**

(71) Applicant: SIEMENS AKTIENGESELLSCHAFT, 80333 München (DE)
(72) Inventor: Bech, John, 8450 Hammel (DK)

(57) **Abstract**

It is described a wind farm comprising a collector grid (106) and a wind turbine (102) being connected to the collector grid (106), wherein the wind turbine (102) comprises a wind turbine transformer (105), and a wind turbine transformer bypass switch (119) and it is disclosed a method for operating a wind farm comprising measuring a collector grid voltage, and bypassing a wind turbine transformer if the measured collector grid voltage is below a first predetermined threshold voltage.

## Description

### Field of invention

The present invention relates to a wind farm, a method for operating a wind farm, a program element, a computer readable medium and a wind farm controller.

### Art Background

Wind farms are becoming more and more popular as an ecological replacement for conventional or nuclear power plants. Up to several hundred individual wind turbines may be pooled in a single wind farm.

Each wind turbine transforms kinetic energy gathered from the wind via its wind turbine blades into rotational energy of its wind turbine rotor which wind turbine rotor then drives a wind turbine generator. Although envisaged not under all constrains a constant speed of the rotor and/or the wind turbine generator may be achievable. Such speed deviations may translate into frequency and/or voltage deviations. However, consumers rely on constant frequency and/or voltage. Hence, wind turbines may comprise converters that convert electrical power produced by the wind turbine generator to electrical power of constant frequency and voltage. Furthermore, wind turbines may comprise a wind turbine transformer to transform the voltage provided by the converter to a higher level and thereby reduce power losses due to lower current and/or keep costs associated to cables low.

The electrical power generated by each wind turbine is then fed into a collector grid, which provides upper grid and thereby consumers with electrical power.

Conventionally, synchronous generators operating at a constant speed, e.g. synchronous generators of fossil fuelled, nuclear, or hydroelectric power stations, are used to support alternating current grids. In case of a grid fault these synchronous generators may provide up to approximately ten times more current than during normal operation, thereby supporting the grid. Collector grids of wind farms fed by wind turbines with converters are limited in supporting the grid at grid fault, because they can only provide approximately nominal current. The reason for this low current is the small thermal time constants in the converters. Accordingly, secure and reliable operation of upper grid and collector grids of wind farms may be compromised and there may be a higher risk of blackout.

Hence, there may be a need for a wind farm, a method for operating a wind farm, a program element, a computer readable medium, and a wind farm controller, which may enhance the current and thereby the apparent power supplied by wind farms under grid faults.

### Summary of the Invention

This need may be met by the subject matter according to the independent claims. Advantageous embodiments of the present invention are described by the dependent claims.

According to a first aspect of the invention there is provided a wind farm comprising a collector grid and a wind turbine being connected to the collector grid, wherein the wind turbine comprises a wind turbine transformer, and a wind turbine transformer bypass switch.

This aspect of the invention may be based on the idea that up-transforming voltage provided by a wind turbine converter implies down-transforming the associated current. However, wind turbine converters of wind turbines are composed of semi-conductor components generally characterized by small thermal time constants. These wind turbine converters may often provide only limited additional current in case of a grid fault. Accordingly, a wind turbine may provide only little additional active or reactive power to the collector grid. The wind turbine transformer bypass switch may allow for bypassing the transformer in case of a collector grid failure. A sudden voltage drop of the collector grid voltage may be seen, for example, as a collector grid voltage. This may occur at grid faults, such as for example short circuit faults at the upper grid or collector grid. Other grid failures may include frequency shifts. Bypassing the transformer may for a given collector grid voltage provide more current and thereby more apparent power to the upper grid and the collector grid.

According to an exemplary embodiment of the wind farm, the wind farm comprises a converter over voltage protector.

Bypassing the wind turbine transformer via the wind turbine transformer bypass switch may increase the voltage at the wind turbine converter. The voltage may be higher than the voltage in undisturbed operation. Thus, a converter over Voltage protector may prevent that the voltage exceeds a rated converter voltage. A converter over voltage protector may be realized in form of a varistor, which limits the voltage. Alternatively, the converter over voltage protector may be realized by other types of limiters.

According to another exemplary embodiment of the wind farm, the wind farm further comprises a wind farm transformer connected to the collector grid and a general power grid, and a wind farm transformer bypass switch.

The collector grid may be connected to a general power grid via a wind farm transformer. The wind farm transformer may up-transform the collector grid voltage to a level acceptable for conventional transmission lines operating at e.g. at 380 kV. Providing such a wind farm with a wind farm transformer bypass switch may help to support general power grids as more current may be fed into the general power grid. This may especially be useful if few conventional synchronous generators are connected to the general power grid.

According to a second aspect of the invention there is provided a method for operating a wind farm wherein the method comprises measuring a collector grid voltage, and bypassing a wind turbine transformer if the measured collector grid voltage is below a first predetermined threshold voltage.

At collector grid faults the collector grid voltage may drop below a first predetermined threshold voltage. The first predetermined threshold voltage may be lower than the rated converter voltage. It may therefore be possible to bypass the wind turbine transformer and let the converter operate at the collector grid voltage and thereby supply more active and reactive power to the collector grid, i.e. to support the collector grid.

According to a first embodiment of the method for operating a wind farm the method further comprises interrupting the bypassing of the wind turbine transformer if the collector grid voltage is above a second predetermined threshold voltage.

When the collector grid recovers from the grid fault the collector grid voltage may exceed the rated converter voltage. Interrupting the bypassing of the wind turbine transformer when the collector grid voltage is above a second predetermined threshold voltage may then protect the converter against over voltage.

According to a second embodiment of the method for operating a wind farm, the method further comprises selecting the first predetermined threshold voltage to be equal to or selecting the first predetermined threshold voltage to be different from the second predetermined threshold voltage.

Selecting the first predetermined threshold voltage to be equal to the second predetermined threshold voltage may reduce the number of control parameters and the operating complexity.

If the first predetermined threshold voltage and the second predetermined threshold voltage are selected to be different from each other the risk of oscillations from a bypassing state to a non-bypassing state may be reduced.

According to another embodiment of the method for operating a wind farm the method further comprises very fast, in particular instant interrupting of bypassing the wind turbine transformer and thereby minimizing the over voltage at the wind turbine converters.

According to a further embodiment of the method for operating a wind farm the method further comprises delaying the bypassing of the wind turbine transformer. In other words, a delay time for switching from a non-bypassing state to a new bypassing state may be included to reduce voltage fluctuations.

According to a further embodiment of the method for operating a wind farm, the method further comprises measuring a general power grid voltage, and bypassing a wind farm transformer if the general power grid voltage is below a third predetermined threshold voltage.

It may be advantageous to collect the electrical power produced by the individual wind turbines at a collector grid voltage below the general power grid voltage normally used for transmission lines. Accordingly, a wind farm transformer may be provided to transform the collector grid voltage to a general grid voltage. Bypassing the wind farm transformer when the general power grid voltage is below a third predetermined threshold voltage may support the general power grid in the same way as has been described above for a collector grid, when providing the collector grid with a wind turbine transformer bypass switch.

According to a still further embodiment of the method for operating a wind farm, the method further comprises interrupting the bypassing of the wind farm transformer if the general power grid voltage is above a forth predetermined threshold voltage.

When the general power grid recovers from the grid fault the general power grid voltage may exceed the rated collector grid voltage. It may, for example, be difficult to ensure a sufficient insulation level of the wind turbine in these circumstances. Interrupting the bypassing of the wind farm transformer when the general power grid voltage is above a forth predetermined threshold voltage may thus ensure safe operation of the wind turbine.

According to another embodiment of the method for operating a wind farm the method further comprises selecting the third predetermined threshold voltage to be equal to or different from the forth predetermined threshold voltage.

Selecting the third predetermined threshold voltage to be equal to the forth predetermined threshold voltage may reduce the number of control parameters and the operating complexity.

If the third predetermined threshold voltage and the forth predetermined threshold voltage are selected to be different from each other the risk of oscillations from a bypassing state to a non-bypassing state may be reduced.

According to yet another embodiment of the method for operating a wind farm, the method further comprises a very fast, in particular instant interrupting of bypassing the wind farm transformer.

According to a third aspect of the invention there is provided a program element for operating a wind farm, the program element, when being executed by a data processor is adapted for controlling and/or for carrying out the method as set forth hereinbefore.

The program element may be implemented as computer readable instruction code in any suitable programming language, such as, for example, JAVA, C++, and may be stored on a computer-readable medium (removable disk, volatile or non-volatile memory, embedded memory/processor, etc.). The instruction code is operable to program a computer or any other programmable device to carry out the intended functions. The program element may be available from a network, such as the World Wide Web, from which it may be downloaded.

According to a forth aspect of the invention there is provided a computer-readable medium on which there is stored a computer program for processing a physical object, the computer program, when being executed by a data processor, is adapted for controlling and/or for carrying out the method as set forth above.

The computer-readable medium may be readable by a computer or a processor. The computer-readable medium may be, for example but not limited to, an electric, magnetic, optical, infrared or semiconductor system, device or transmission medium. The computer-readable medium may include at least one of the following media: a computer-distributable medium, a program storage medium, a record medium, a computer-readable memory, a random access memory, an erasable programmable read-only memory, a computer-readable software distribution package, a computer-readable signal, a computer-readable telecommunications signal, computer-readable printed matter, and a computer-readable compressed software package.

According to a fifth aspect of the invention there is provided a wind farm controller, the wind farm controller being adapted for controlling a wind farm as set forth hereinbefore with a method as set forth hereinbefore.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

Figure 1 shows a single line diagram of a wind farm according to the invention.
Figure 2 shows a flow chart of a method for operating a wind farm.
Figure 3 shows the behavior of voltages and apparent power during a collector grid fault of a conventional wind farm.
Figure 4 shows the behavior of voltages and apparent power during a collector grid fault of a wind farm according to the invention.
Figure 5 shows a comparison of apparent power during a collector grid fault of a conventional wind farm and a wind farm according to the invention.

### Detailed Description

The illustration in the drawing is schematically.

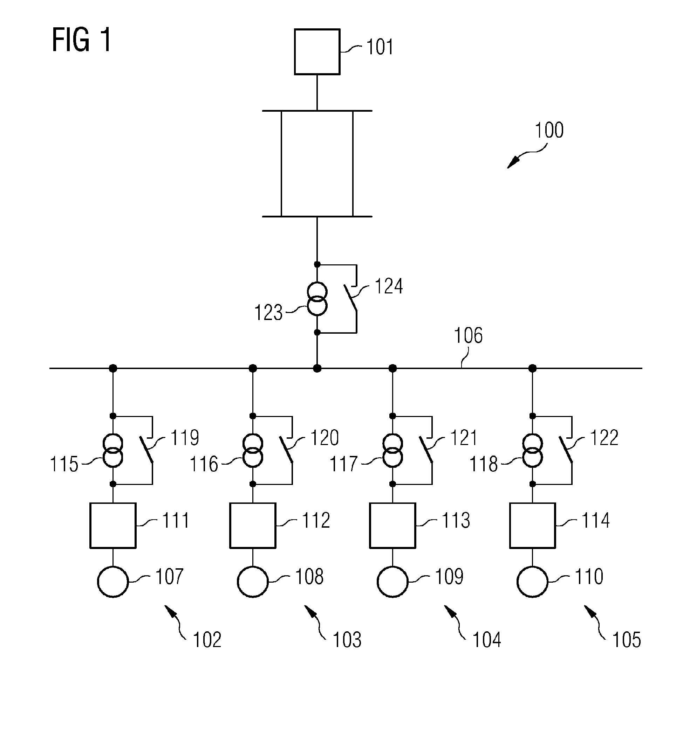

Figure 1 shows a single line diagram of a wind farm 100 connected to an upper grid 101. The wind farm comprises four wind turbines 102, 103, 104, 105. The wind turbines 102, 103, 104, 105 are connected to a collector grid 106. The wind turbines 102, 103, 104, 105 each comprise a respective generator 107, 108, 109, 110. Converters 111, 112, 113, 114 are provided at the output of generators 107, 108, 109, 110 to convert the values parameters of the electrical power generated by the generators 107, 108, 109, 110 to the values of the parameters suitable for transformation and/or use by electrical power consumers. Inter alia the converters 107, 108, 109, 110 may convert the values of frequency and/or phase of the electrical power generated by generators 107, 108, 109, 110. The converters 107, 108, 109, 110 may, for example, equalize the fluctuating frequency of the electrical power generated by the generators 107, 108, 109, 110 to a constant value, e.g. 50 Hertz or 60 Hertz. Furthermore, the converters 107, 108, 109, 110 may comprise an over voltage protector, protecting the converters 107, 108, 109, 110 from voltages exceeding the rated voltage of the converters 107, 108, 109, 110.

The voltage of the converted electrical power is typically transformed to a higher voltage by wind turbine transformers 115, 116, 117, 118. Up-transforming the voltage may reduce power losses caused by cable resistances. The converted and transformed electrical power of each wind turbine 102, 103, 104, 105 is then fed into a collector grid 105. However, each wind turbine 102, 103, 104, 105 is furthermore provided with a wind turbine transformer bypass switch 119, 120, 121, 122, which allows bypassing the corresponding wind turbine transformer 115, 116, 117, 118. This may allow supporting the collector grid 106 and/or the upper grid 101 in case of collector grid faults and/or upper grid faults.

The electrical power provided by the collector grid 105 is typically transformed by a wind farm transformer 123 to an even higher voltage level suitable for the transmission lines of an upper grid 101. A wind farm transformer bypass switch 124 is associated to the wind farm transformer 123 and may allow supporting the upper grid 101 with additional current and/or additional apparent power, in particular reactive power, in case of upper grid failures by bypassing the wind farm transformer 123.

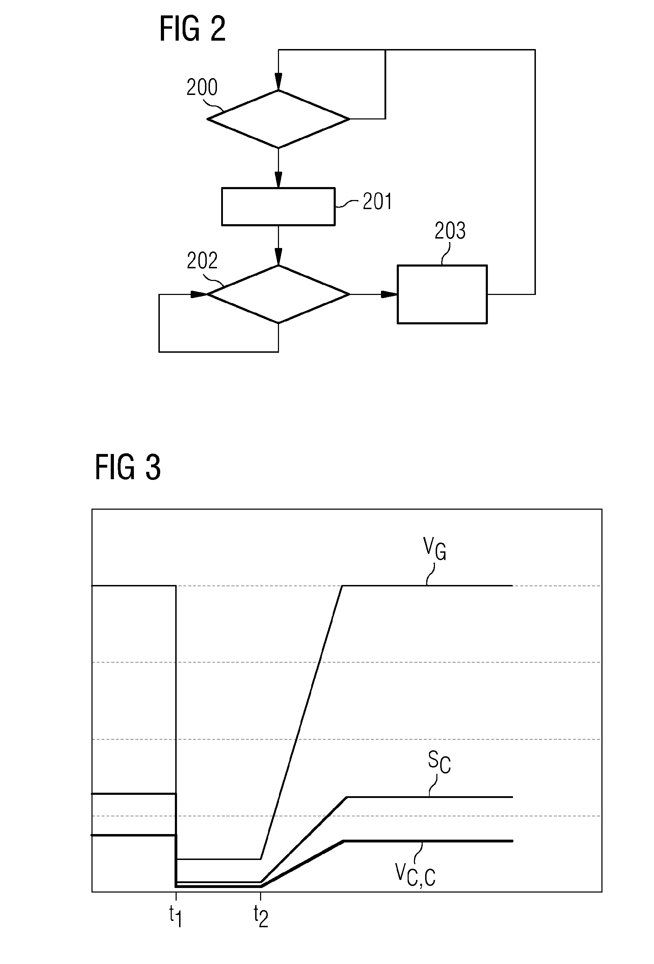

Figure 2 shows a method for operating a wind farm. The collector grid voltage is continuously measured. In step 200 the collector grid voltage is compared to a first predetermined threshold voltage. If the measured collector grid voltage drops below this first predetermined threshold voltage in step 201 the wind turbine transformer bypass switch of at least one wind turbine is closed allowing current to bypass the wind turbine transformer. Hence, more current may be fed into the collector grid by the wind turbine. Further, in step 202 it is determined whether the collector grid voltage exceeds a second predetermined threshold voltage. If this is not the case the transformer bypass switch remains closed and comparing the collector grid voltage with the second predetermined threshold voltage continues. Otherwise in step 203 the bypass switch is opened again such that only transformed current is supplied to the collector grid. In step 203 the opening of the bypass switch, preferably may be performed very fast and/or may be based on instantaneous measurement of voltage, so no over voltage occurs at the wind turbines. The bypass switch may preferably be of a semiconductor type, enabling fast turn off. The bypass switch closing should be based on a delayed signal, which may be a RMS signal. Figure 3 shows the behavior of collector grid voltage V_{G}, converter voltage V_{c},_{c}, and apparent power S_{c} delivered by the converter in case of a collector grid fault in the time interval from t₁ to t₂ for a conventional wind farm. When the collector grid voltage V_{G} drops at t₁ the converter voltage V_{c},_{c}, i.e. the voltage at the output of the converter, decreases proportionally based on the amplification factor of the wind turbine transformer. As the converter may not be able to provide significantly more current, the wind turbine can only provide little more apparent power S_{c} to the collector grid, due the relation S=sqrt(3)*voltage*current. Hence, wind turbines of conventional wind farms provide only limited collector grid support.

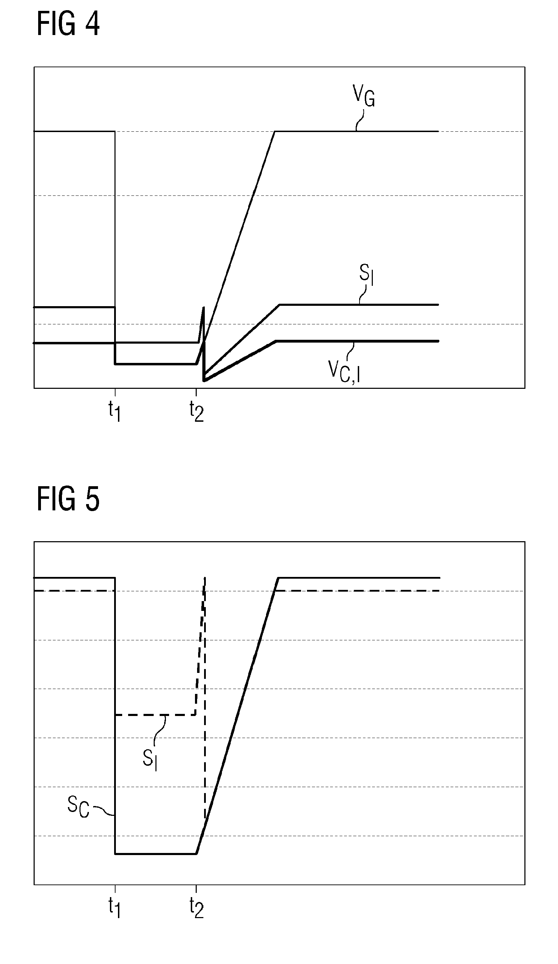

Figure 4 shows the behavior of collector grid voltage V_{G}, converter voltage V_{c},_{I}, and apparent power S_{I} delivered by the converter in case of a collector grid fault in the time interval from t₁ to t₂ for an embodiment of a wind farm according to the invention. When the collector grid voltage V_{G} at the time t₁ drops below a first predetermined threshold voltage the wind turbine transformer bypass switch is closed and the converter voltage V_{c},_{I} becomes equal to V_{G}. Accordingly, the wind turbine may provide more apparent power S_{I} to the wind farm collector grid. When the grid voltage V_{G} raises again at t₂ so does the apparent power S_{I} and when the grid voltage V_{G} becomes higher than a second predetermined threshold voltage, the wind turbine transformer bypass switch is opened again, the apparent power S_{I} drops and then converges to the level, which it had before the grid fault occurred, from below.

As apparent from Figure 5 comparing S_{c} and S_{I} an exemplary embodiment of a wind farm according to the invention may provide significantly more apparent power in case of a collector grid or upper grid fault.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

## Claims

1. Wind farm comprising
a collector grid (106) and
a wind turbine (102) being connected to the collector grid (106),
wherein the wind turbine (102) comprises
a wind turbine transformer (105), and
a wind turbine transformer bypass switch (119).

2. Wind farm as set forth in the preceding claims 1, the wind farm further comprising
a converter over voltage protector.

3. Wind farm as set forth in any one of the preceding claims 1 and 2, the wind farm further comprising a wind farm transformer (115), and
a wind farm transformer bypass switch (119).

4. Method for operating a wind farm, the method comprising measuring a collector grid voltage, and
bypassing a wind turbine transformer if the measured collector grid voltage is below a first predetermined threshold voltage.

5. Method for operating a wind farm as set forth in the preceding claim 4, the method further comprising interrupting the bypassing of the wind turbine transformer if the collector grid voltage is above a second predetermined threshold voltage.

6. Method for operating a wind farm as set forth in the preceding claim 5, the method further comprising selecting the first predetermined threshold voltage to be equal to the second predetermined threshold voltage or selecting the first predetermined threshold voltage to be different from the second predetermined threshold voltage.

7. Method for operating a wind farm as set forth in any one of the preceding claims 5 or 6, the method further comprising very fast interrupting of the bypassing of the wind turbine transformer.

8. Method for operating a wind farm as set forth in any one of the preceding claims 5 to 7, the method further comprising delaying the bypassing of the wind turbine transformer.

9. Method for operating a wind farm as set forth in any one of the preceding claims 5 to 8, the method further comprising measuring a general power grid voltage, and
bypassing a wind farm transformer if the general power grid voltage is below a third predetermined threshold voltage.

10. Method for operating a wind farm as set forth in the preceding claim 9, the method further comprising interrupting the bypassing of the wind farm transformer if the general power grid voltage is above a forth predetermined threshold voltage.

11. Method for operating a wind farm as set forth in any of the preceding claims 9 or 10, the method further comprising selecting the third predetermined threshold voltage to be equal to the forth predetermined threshold voltage or selecting the third predetermined threshold voltage to be different from the forth predetermined threshold voltage.

12. Method for operating a wind farm as set forth in any one of the preceding claims 10 or 11, the method further comprising
very fast interrupting of the bypassing of the wind farm transformer.

13. Program element for operating a wind farm, the program element, when being executed by a data processor, is adapted for controlling and/or for carrying out the method as set forth in any one of the claims 4 to 12.

14. Computer readable medium on which there is stored a computer program for processing a physical object, the computer program, when being executed by a data processor, is adapted for controlling and/or for carrying out the method as set forth in any one of the claims 4 to 12.

15. Wind farm controller being adapted for controlling a wind farm as set forth in any one of the claims 1 to 3 with a method as set forth in any one of the claims 4 to 12.
